# EUROPÄISCHE PATENTSCHRIFT

(11) **EP 2 103 828 B1**
(45) Veröffentlichungstag und Bekanntmachung des Hinweises auf die Patenterteilung: **17.10.2012**
(21) Anmeldenummer: 08005325.9
(22) Anmeldetag: 20.03.2008
(51) Int. Cl.: F16D 11/04, F16D 25/04

(54) **Kupplung**
Coupling
Couplage

(43) Veröffentlichungstag der Anmeldung: 23.09.2009
(73) Patentinhaber: IPROTEC Maschinen- und Edelstahlprodukte GmbH, 32469 Petershagen-Friedewalde (DE)
(72) Erfinder: Kochsiek, Guido, 33818 Leopoldshöhe (DE)
(74) Vertreter: Stenger, Watzke & Ring

(56) Entgegenhaltungen:
- EP-A- 1 225 356
- DE-C1- 3 339 186
- GB-A- 191 316 521
- US-A1- 2002 112 934

## Beschreibung

Die Erfindung betrifft eine Kupplung mit einem ersten Kupplungsteil und einem zweiten Kupplungsteil, wobei die beiden Kupplungsteile relativ zueinander verdrehbar angeordnet sind.

Kupplungen dienen der festen oder beweglichen, starren oder elastischen und, falls technisch bedingt, der ein- und ausrückbaren Verbindung von Wellen und auch anderen Bauteilen zur Übertragung von Drehmomenten. Sie sind aus dem Stand der Technik hinlänglich bekannt, weshalb es eines gesonderten druckschriftlichen Nachweises an dieser Stelle nicht bedarf.

Obgleich aus dem Stand der Technik zahlreiche und auf jeweilige Anwendungsfälle im Besonderen abgestimmte Kupplungskonstruktionen z.B. aus DE 33 39 186 bekannt sind, besteht nach wie vor Verbesserungsbedarf. Es ist deshalb die **Aufgabe** der Erfindung, eine neuartige Kupplung vorzuschlagen, die insbesondere eine positionsgenaue Lagefixierung der beiden Kupplungsteile zueinander erlaubt.

Zur Lösung dieser Aufgabe wird mit der Erfindung eine Kupplung vorgeschlagen, die sich durch ein Kupplungselement auszeichnet, das relativ zu einem der beiden Kupplungsteile verdrehfest positionierbar ist, wobei das andere der beiden Kupplungsteile ein Kupplungsglied aufweist, das mit einem vom Kupplungselement getragenen Kupplungsglied zusammenwirkt.

Die erfindungsgemäße Kupplung umfaßt ein erstes Kupplungsteil, ein zweites Kupplungsteil sowie ein Kupplungselement. Das Kupplungselement ist beispielsweise zum zweiten Kupplungsteil verdrehfest positionierbar. Dies ist bevorzugterweise dadurch erreicht, dass das Kupplungselement am zweiten Kupplungsteil angeordnet ist. Mit Vorteil wird vorgeschlagen, dass für eine verdrehfeste Verbindung zwischen Kupplungselement einerseits und zweitem Kupplungsteil andererseits eine Polygon-Verbindung vorgesehen ist. Aufgrund dieser Polygon-Verbindung wird das Kupplungselement bei einer Verdrehbewegung des zweiten Kupplungsteils mitgenommen. Andere verdrehfeste Verbindungen liegen im Rahmen der Erfindung.

Die erfindungsgemäße Kupplung verfügt des weiteren über Kupplungsglieder, wobei ein erstes Kupplungsglied vom ersten Kupplungsteil und ein zweites Kupplungsglied vom Kupplungselement getragen ist. Diese Kupplungsglieder wirken zusammen und können im Bedarfsfall zur Kraftübertragung zwischen erstem Kupplungsteil und zweitem Kupplungsteil in form- und/oder kraftschlüssigen Eingriff gebracht werden.

Der besondere Vorteil der erfindungsgemäßen Kupplung ist darin zu sehen, daß eine kraftübertragende Verbindung zwischen erstem Kupplungsteil und zweitem Kupplungsteil in quasi indirekter Weise über die Kupplungsglieder erfolgt, was eine positionsgenaue Lagefixierung der beiden Kupplungsteile zueinander erlaubt. In diesem Zusammenhang ist ferner von Vorteil, daß sich eine verschleißbedingte Abnutzung allein auf die Kupplungsglieder konzentriert, die im Bedarfsfall in einfacher Weise ausgetauscht werden können. Die erfindungsgemäße Kupplung erweist sich damit insgesamt als außerordentlich langlebig, wenn im Zuge regelmäßiger Wartungsarbeiten verschlissene Kupplungsglieder ordnungsgemäß ersetzt werden.

Es kommen bevorzugterweise sowohl kupplungsteilseitig als auch kupplungselementseitig eine Mehrzahl von Kupplungsgliedern zum Einsatz. Diese sind bevorzugterweise als Kugeln ausgebildet und in dafür vorgesehene Nuten sowohl am Kupplungsteil als auch am Kupplungselement eingesetzt. Dabei entspricht die Nutlänge einem Vielfachen des Durchmessers der als Kupplungsglieder eingesetzten Kugeln, so daß die Nut ohne Ausbildung irgendwelcher Zwischenräume mit den als Kupplungsglieder dienenden Kugeln voll besetzt ist. Im bestimmungsgemäßen Verwendungsfall können die Kupplungsglieder für eine kraftübertragende Kopplung von erstem Kupplungsteil und zweitem Kupplungsteil in Eingriff miteinander gebracht werden. Wenn sich die Kupplungsglieder nicht im Eingriff befinden, sind die beiden Kupplungsteile relativ zueinander verdrehbar Sobald sich die Kupplungsglieder hingegen im Eingriff befinden, ergibt sich eine verdrehfeste Verbindung zwischen den beiden Kupplungsteilen. Ähnlich wie bei einer Verzahnung ergibt sich ein Eingriff der Kupplungsglieder, das heißt eine kraftübertragende Verbindung zwischen den Kupplungsteilen dann, wenn die als Kupplungsglieder dienenden Kugeln um einen halben Kugeldurchmesser versetzt, das heißt auf Lücke aneinander gepreßt sind, so daß zwei erste Kupplungsglieder des ersten Kupplungsteils ein zweites Kupplungsglied des Kupplungselements zwischen sich aufnehmen bzw. umgekehrt, das heißt zwei zweite Kupplungsglieder des Kupplungselements ein erstes Kupplungsglied des ersten Kupplungsteils zwischen sich aufnehmen.

Aufgrund der vorbeschriebenen Anordnung ist es in vorteilhafter Weise möglich, die beiden Kupplungsteile in höchstem Maße positionsgenau in ihrer relativen Lage zueinander zu positionieren und in dieser Lage eine kraftübertragende Verbindung zwischen den beiden Kupplungsteilen auszubilden. Kommen der bevorzugten Ausführungsform nach als Kupplungsglieder Kugeln zum Einsatz, so bestimmt sich die Positionierungsgenauigkeit der beiden Kupplungsteile gegenüber einander in Abhängigkeit des halben Durchmessers der als Kupplungsglieder eingesetzten Kugeln. Es kann deshalb in vorteilhafter Weise rein konstruktiv die mögliche Positionsgenauigkeit der beiden Kupplungsteile vorgegeben werden, indem als Kupplungsglieder entsprechend dimensionierte Kugeln zum Einsatz kommen.

Für ein Anpressen der Kupplungsglieder aneinander im Eingriffsfall dient das erfindungsgemäß vorgesehene Kupplungselement. Das Kupplungselement hat einen radialen Außenrandbereich und einen radialen Innenbereich. Zwischen beiden ist ein ringförmiger federelastischer Bereich ausgebildet. Aus diesem Grunde können der Außenrandbereich einerseits und der Innenrandbereich andererseits in axialer Richtung relativ zueinander verschoben werden. So kann am Außenrandbereich oder am Innenrandbereich dann die Anordnung der Kupplungsglieder erfolgen. Beispielsweise kann die bereits vorbeschriebenen Nut zur Aufnahme der Kugelelemente ausgebildet sein. Aber auch andere Kupplungsglieder wie Reibflächen, Nocken/Nuten, Verzahnungen und dergleichen können ausgebildet sein. Aufgrund der federelastischen Ausgestaltung lassen sich also Außenrandbereich und Innenrandbereich relativ zueinander bewegen. Es gibt Kombinationen wo der Innenrandbereich verdrehfest gegenüber einem der Kupplungselemente angeordnet ist. In dem Fall lässt sich durch entsprechende Druckbeaufschlagung über den federelastischen Bereich der Außenrandbereich gegenüber dem anderen Kupplungselement bewegen. Dies kann auch umgekehrt erfolgen, d. h. der Außenrandbereich kann gegenüber einem Kupplungselement fest sein und der Innenrandbereich axial federelastisch bewegt werden. Auch ist eine Kombination möglich, indem über den Druck beide Bereiche relativ zueinander bewegt und erst im Eingriff mit den jeweiligen Kupplungselementen gebracht werden. Es sind auch alle Kombinationen denkbar, d. h. ein Eingriff erfolgt bei Druckbeaufschlagung oder wenn Druck abgestellt wird. Im montierten Zustand der Kupplung können durch die beschriebene Anordnung die vom Kupplungselement getragenen Kupplungsglieder in Richtung der vom Kupplungsteil getragenen Kupplungsglieder zu und wieder weg bewegt werden. Dabei kann es sich um axial auf den Randbereich befindliche Kupplungsglieder handeln, aber auch um im radialen Stirnrandbereich angeordnete Kupplungsglieder, die in entsprechende radial angeordnete Gegenstücke eingreifen.

Die Kraftbeaufschlagung des Kupplungselements zwecks Verfahr- bzw. Verschwenkbewegung des radialen Außenrandbereichs geschieht bevorzugterweise hydraulisch oder pneumatisch. Es sind aber auch elektrische, elektromagnetische oder dergleichen Krafteinwirkungen im Rahmen der Erfindung. Konstruktiv ist in diesem Zusammenhang vorgesehen, daß das zweite Kupplungsteil über eine korrespondierend zum Kupplungselement ausgebildete Aufnahme verfügt, in die das Kupplungselement im endmontierten Zustand der erfindungsgemäßen Kupplung fluiddicht eingesetzt ist. Das das Kupplungselement aufnehmende Kupplungsteil verfügt des weiteren über Druckkammern, die unmittelbar an das vom Kupplungsteil aufgenommene Kupplungselement angrenzend ausgebildet sind. Anstelle mehrerer Druckkammern kann auch eine einzige Druckkammer vorgesehen sein, die beispielsweise in Entsprechung der Ausgestaltung des Kupplungselements ringförmig bzw. schleifenförmig ausgebildet ist. Wenn nun im Betriebsfall innerhalb der Druckkammer ein gewisser Mindestdruck erzeugt wird, so hat dies ein Anheben des federelastisch ausgebildeten radialen Außenrandbereichs des Kupplungselements zur Folge, und zwar in Richtung auf das erste Kupplungsteil. Sobald der Druck unter den gewissen Mindestdruck wieder absinkt, senkt sich auch der radiale Außenrandbereich des Kupplungselements aufgrund seiner federelastischen Ausgestaltung wieder ab, bis das Kupplungselement seine Normallage in der Aufnahme des zweiten Kupplungsteils wieder einnimmt.

Im Falle des elektrischen oder elektromagnetischen Betätigens sind in den entsprechenden Bereichen beispielsweise Spulen oder sonstige geeignete Bauelement angeordnet.

Wie aus der obigen Beschreibung klar sein sollte, sind das erste und das zweite Kupplungsteil in axialer Richtung beabstandet voneinander angeordnet. Dieser Abstand ist konstruktiv vorgegeben und ergibt sich in Abhängigkeit der Größe der Kupplungsglieder, das heißt im Falle von Kugeln als Kupplungsglieder in Abhängigkeit des Kugeldurchmessers einerseits und der möglichen Verfahr- bzw. Verschwenkbewegung des radialen Außenrandbereichs des Kupplungselements in Richtung auf das dem Kupplungselement im endmontierten Zustand gegenüberliegende Kupplungsteil andererseits. Die Kupplungsteile selbst sind in der Regel in axialer Richtung nicht zueinander verschieblich ausgebildet, was aber möglich ist. Um das erste und das zweite Kupplungsteil bestimmungsgemäß kraftübertragend miteinander zu verbinden, sind die von dem einen Kupplungsteil einerseits und die vom Kupplungselement andererseits getragenen Kupplungsglieder in Eingriff miteinander zu bringen. Dies geschieht bei der erfindungsgemäßen Kupplung mittels des Kupplungselements, indem der die Kupplungsglieder tragende radiale Außenrandbereich des Kupplungselements durch pneumatische, hydraulische oder elektrische Druckeinwirkung zur Überbrückung des zwischen den beiden Kupplungsteilen bestehenden axialen Abstandes bewegt, d. h. verfahren bzw. verschwenkt wird. Infolge dieser Verformung des federelastischen Bereiches des Kupplungselements kommt es zu einem Ineingriffbringen der Kupplungsglieder und damit zur Ausgestaltung einer kraftübertragenden Verbindung zwischen den beiden Kupplungsteilen. Um die so ausgestaltete Verbindung zwischen den Kupplungsteilen wieder zu lösen, ist die Druckbeaufschlagung des radialen Außenrandbereichs des Kupplungselements so weit zu minimieren, daß der radiale Außenrandbereich aufgrund der federelastischen Ausgestaltung des Zwischenbereiches zurück in seine Normalstellung verfahren bzw. verschwenken kann.

Weitere Vorteile und Merkmale der Erfindung ergeben sich aus der nachfolgenden Beschreibung anhand der Fign. Dabei zeigen
- Fig. 1: in schematischer Schnittdarstellung die erfindungsgemäße Kupplung;
- Fig. 2: in teilgeschnittener Seitenansicht die erfindungsgemäße Kupplung in der Ausgestaltungsform eines Schalttisches;
- Fig. 3: in einer Seitenansicht das Kupplungselement nach Fig. 2;
- Fig. 4: in einer Draufsicht von oben das Kupplungselement nach Fig. 2 bzw. 3;
- Fig. 5: in einer geschnittenen Seitenansicht das erste Kupplungsteil nach Fig. 2;
- Fig. 6: in einer Draufsicht von oben das erste Kupplungsteil nach Fig. 2 bzw. Fig. 5;
- Fig. 7: in einer geschnittenen Seitenansicht das Kupplungselement nach Fig. 2 in einer alternativen Ausgestaltungsform und
- Fig. 8: in einer Draufsicht von oben das Kupplungselement nach Fig. 7.

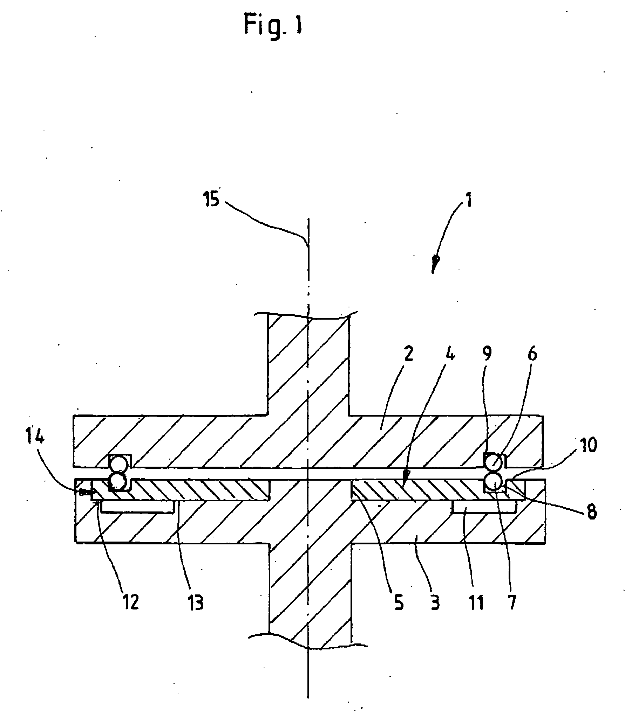

Fig. 1 zeigt in einer schematischen Darstellung eine erfindungsgemäße Kupplung 1. Des besseren Verständnisses wegen ist die Darstellung nach Fig. 1 vereinfacht.

Wie die Darstellung nach Fig. 1 erkennen läßt, verfügt die erfindungsgemäße Kupplung über ein erstes Kupplungsteil 2 und ein zweites Kupplungsteil 3. Diese beiden Kupplungsteile 2 und 3 sind um eine gemeinsame Achse 15 relativ zueinander verdrehbar ausgebildet. In axialer Richtung der Achse 15 sind die beiden Kupplungsteile 2 und 3 indes in einem vorgegebenen, festen Abstand zueinander positioniert. Ein Verfahren bzw. ein Verschieben der Kupplungsteile relativ zueinander in axialer Richtung der Achse 15 ist nicht möglich.

Für eine kraftübertragende Drehverbindung der beiden Kupplungsteile 2 und 3 dienen Kupplungsglieder, und zwar erste Kupplungsglieder 6 und zweite Kupplungsglieder 7. Für eine kraftübertragende Drehverbindung von erstem Kupplungsteil 2 und zweitem Kupplungsteil 3 sind die ersten Kupplungsglieder 6 und die zweiten Kupplungsglieder 7 in form- und/oder kraftschlüssigen Eingriff zu bringen. Die Kupplungsteile 2 und 3 sind dann verdrehfest zueinander positioniert, so daß von dem ersten Kupplungsteil 2 auf das zweite Kupplungsteil 3 ein Drehmoment übertragen werden kann und umgekehrt. Sobald der form- und/oder kraftschlüssige Verbindungsschluß zwischen den Kupplungsgliedern wieder gelöst wird, sind die beiden Kupplungsteile 2 und 3 wieder relativ zueinander verdrehbar, das heißt in gelöster Stellung der Kupplungsglieder ist eine Drehmomentübertragung vom ersten Kupplungsteil 2 auf das zweite Kupplungsteil 3 oder umgekehrt nicht möglich.

Aus der Darstellung nach Fig. 1 ergibt sich, daß die ersten Kupplungsglieder 6 vom ersten Kupplungsteil 2 getragen sind. Zu diesem Zweck verfügt das insgesamt scheibenförmig ausgebildete erste Kupplungsteil 2 über eine umlaufende Ringnut 9, in die die ersten Kupplungsglieder 6 bevorzugterweise verdrehfest eingesetzt sind. Im gezeigten Ausführungsbeispiel nach Fig. 1 sind die ersten Kupplungsglieder 6 als Kugeln ausgebildet.

Die zweiten Kupplungsglieder 7 sind von einem ringförmig ausgebildeten Kupplungselement 4 getragen. Zu diesem Zweck weist das erfindungsgemäße Kupplungselement 4 im radialen Außenrandbereich 10 eine umlaufende Nut 8 auf, in die die bevorzugterweise gleichfalls als Kugeln ausgebildeten zweiten Kupplungsglieder 7 bevorzugterweise verdrehfest eingesetzt sind. Wie die Darstellung nach Fig. 1 erkennen läßt, liegen im endmontierten Zustand der Kupplung 1 die Randnut 9 des ersten Kupplungsteils 2 und die Nut 8 des Kupplungselements 4 und damit die ersten Kupplungsglieder 6 und die zweiten Kupplungsglieder 7 einander gegenüber.

Das Kupplungselement 4 ist verdrehfest am zweiten Kupplungsteil 3 angeordnet. Diese drehfeste Verbindung wird mittels einer Polygonverbindung 5 realisiert. Dabei verfügt das zweite Kupplungsteil 3 über eine korrespondierend zur geometrischen Ausgestaltung des Kupplungselements 4 ausgebildeten Aufnahme 14, in die das Kupplungselement 4 im endmontierten Zustand eingesetzt ist, wie sich aus der Darstellung nach Fig. 1 entnehmen läßt. Es versteht sich dabei von selbst, daß die Polygonverbindung 5 alternativ oder ergänzend auch stirnseitig des radialen Außenrandbereiches 10 des Kupplungselements 4 ausgebildet sein kann.

Die polygonale Verbindung 5 zwischen Kupplungselement 4 und zweitem Kupplungsteil 3 ist als Welle-Nabe-Verbindung ausgestaltet, wobei gemäß einem besonderen Vorschlag der Erfindung vorgesehen sein kann, dass hinsichtlich dieser Verbindung in Längsrichtung der Achse 15 mehrere Radialabsätze vorgesehen sind. Diese Ausgestaltung hat den Vorteil, dass die im Zuge einer bestimmungsgemäßen Belastung der Welle-Nabe-Verbindung auftretende Maximalkraft auf die einzelnen Radialabsätze verteilt wird. Dadurch wird zwar die insgesamt im Belastungsfall auftretende Kraft nicht minimiert, es ergibt sich aber eine optimierte Verteilung der maximal auftretenden Kraft, was es in vorteilhafter Weise ermöglicht, die einzelnen Bauteile weniger stark zu dimensionieren, was einen Materialvorteil erbringt.

Das zweite Kupplungsteil 3 stellt eine zwischen zwei Absätzen 12 und 13 ausgebildete Druckkammer 11 bereit, wobei das zweite Kupplungsteil 3 in Entsprechung des ersten Kupplungsteils 2 ebenfalls insgesamt scheibenförmig ausgebildet ist, weshalb sowohl die Druckkammer 11 als auch die Absätze 12 und 13 jeweils ringförmig umlaufend ausgestaltet sind.

Wie sich aus der Darstellung nach Fig. 1 ergibt, ist die vom zweiten Kupplungsteil 3 bereitgestellte Druckkammer 11 mit Bezug auf die Zeichnungsebene nach Fig. 1 unterhalb des radialen Außenrandbereichs 10 des Kupplungselements 4 ausgebildet. Dieser radiale Außenrandbereich 10 des Kupplungselements 4 ist federelastisch ausgebildet und kann bei entsprechender Kraftbeaufschlagung verfahren bzw. verschwenkt werden, und zwar mit Bezug auf die Zeichnungsebene nach Fig. 1 nach oben und unten, das heißt auf das erste Kupplungsteil 2 zu bzw. von diesem weg.

Die Kraftbeaufschlagung des Kupplungselements 4, das heißt des radialen Außenrandbereichs 10 des Kupplungselements 4 geschieht mittels hydraulischer oder pneumatischer Druckeinwirkung über die Druckkammer 11. Innerhalb der Druckkammer wird ein über ein Mindestdruck hinausgehender Druck erzeugt, der dann in der Konsequenz dazu führt, daß sich der radiale Außenrandbereich 10 mit Bezug auf die Zeichnungsebene nach Fig. 1 nach oben hin aufwölbt. Infolge dessen werden die vom Kupplungselement 4 getragenen zweiten Kupplungsglieder 7 in bestimmungsgemäßen Eingriff mit den vom ersten Kupplungsteil 2 getragenen ersten Kupplungsgliedern 6 in Eingriff gebracht, was sodann zu einer kraftübertragenden Verbindung zwischen erstem Kupplungsteil 2 und zweitem Kupplungsteil 3 führt. Soll diese kraftübertragende, drehfeste Verbindung von erstem Kupplungsteil 2 und zweitem Kupplungsteil 3 wieder gelöst werden, so ist der in der Druckkammer 11 herrschende Druck unter einen gewissen Mindestdruck zu reduzieren, infolge dessen es aufgrund der federelastischen Ausgestaltung des radialen Außenrandbereichs 10 des Kupplungselements 4 zu einem Zurückverfahren des radialen Außenrandbereichs 10 des Kupplungselements 4 in Richtung auf das zweite Kupplungsteil 3 kommt. Infolge dieses Zurückverfahrens bzw. Zurückverschwenkens des radialen Außenrandbereichs 10 des Kupplungselements 4 werden die ersten Kupplungsglieder 6 und die zweiten Kupplungsglieder 7 wieder außer Eingriff genommen, so daß die drehfeste Verbindung zwischen erstem Kupplungsteil 2 und zweitem Kupplungsteil 3 aufgehoben wird. In dieser gelösten Stellung können sich das erste Kupplungsteil 2 und das zweite Kupplungsteil 3 wieder relativ zueinander um die gemeinsame Achse 15 verdrehen.

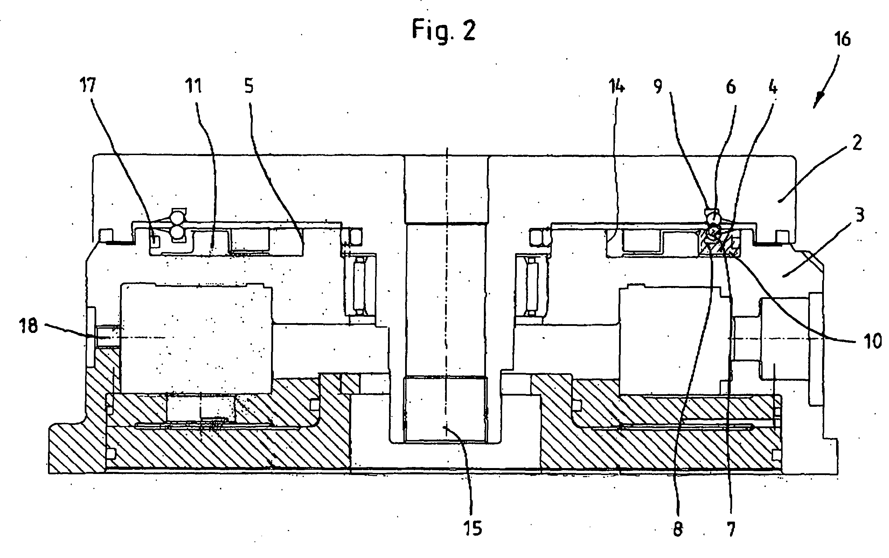

Ein besonderes Ausführungsbeispiel der erfindungsgemäßen Kupplung in Form eines Schalttisches 16 zeigen die Fign. 2 bis 6, wobei die jeweiligen Fign. jeweils unterschiedliche Baukomponenten des Schalttisches bzw. unterschiedliche Ansichten dieser Baukomponenten zeigen.

Fig. 2 zeigt in einer Übersichtsdarstellung eine Zusammenbauzeichnung des Schalttisches 16. Dieser verfügt über ein erstes Kupplungsteil 2, das gemäß dieser Ausgestaltungsform als Drehtisch zu bezeichnen ist. Der Drehtisch, daß heißt das erste Kupplungsteil 2 ist um eine Achse 15 verdrehbar ausgebildet, und zwar relativ verdrehbar zu einem gemäß diesem Ausführungsbeispiel als Gehäuse zu bezeichnenden, feststehenden zweiten Kupplungsteil 3. Konstruktiv ist dies bei der Ausgestaltungsform nach Fig. 2 dadurch realisiert, daß das erste Kupplungsteil 2 mittels eines entsprechenden Drehlagers relativ verdrehbar gegenüber dem zweiten Kupplungsteil 3 an diesem festgelegt ist.

Mit Bezug auf die Zeichnungsebene nach Fig. 2 ist zwischen erstem Kupplungsteil 2 und zweitem Kupplungsteil 3 ein ringförmiges Kupplungselement 4 angeordnet. Dies ist fluiddicht in eine dafür vorgesehene Aufnahme 14 des zweiten Kupplungsteils 3 eingesetzt. Zum Zwecke der fluiddichten Anordnung des Kupplungselements am zweiten Kupplungsteil 3 dienen entsprechende Dichtelemente, so zum Beispiel ein in den Zeichnungen nicht näher dargestelltes Dichtelement, das in die Stimnut 14 des Kupplungselements 4 eingesetzt ist.

Das Kupplungselement 4 ist mittels einer Polygon-Verbindung 5 verdrehfest am zweiten Kupplungsteil 3 angeordnet. Ebenso wie das zweite Kupplungsteil 3 ist damit auch das Kupplungselement 4 im Vergleich zum ersten Kupplungsteil 2 drehfest angeordnet. In anderen Worten: Eine Verdrehung des ersten Kupplungsteils 2 findet gegenüber dem zweiten Kupplungsteil 3 und damit auch gegenüber dem mit dem zweiten Kupplungsteil 3 drehfest verbundenen Kupplungselement 4 statt.

Im radial außenliegenden Randbereich 10 ist das Kupplungselement 4 mit einer umlaufenden Nut 8 ausgestattet, in die zweite Kupplungsglieder 7 in Form von Kugeln eingesetzt sind. Dieser Nut 8 ist mit Bezug auf die Zeichnungsebene nach Fig. 2 gegenüberliegend eine Ringnut 9 im ersten Kupplungsteil 2 ausgebildet, in die Kupplungsglieder gleichfalls in Form von Kugeln eingesetzt sind. In der schon anhand von Fig. 1 vorbeschriebenen Weise können diese Kupplungsglieder 6 und 7 für eine kraftschlüssige Verbindung von erstem Kupplungsteil 2 und zweitem Kupplungsteil 3 in Eingriff gebracht werden.

Das zweite Kupplungsteil 3 stellt eine Druckkammer 11 bereit, die über einen Einlaß 18 mit einem Fluid, beispielsweise Luft oder Öl befüllt werden kann. Infolge einer Fluidbefüllung der Druckkammer 11 steigt der Druck innerhalb der Druckkammer 11, was eine mit Bezug auf die Zeichnungsebene nach Fig. 2 unterseitige Kraftbeaufschlagung des radialen Außenrandbereichs 10 des Kupplungselements 4 zur Folge hat. Infolge dieser Kraftbeaufschlagung verschwenkt der radiale Außenrandbereich 10 des Kupplungselements 4 in der schon anhand von Fig. 1 beschriebenen Weise mit Bezug auf die Zeichnungsebene nach Fig. 2 nach oben, was zu einem Ineingriffbringen von den ersten Kupplungsgliedern 6 und den zweiten Kupplungsgliedern 7 mit der Konsequenz führt, daß das erste Kupplungsteil verdrehfest gegenüber dem zweiten Kupplungsteil 3 arretiert und an diesem festgelegt ist.

Wie sich aus der obigen Beschreibung ergibt, kann das als Drehtisch des Schalttisches 16 dienende erste Kupplungsteil 2 taktweise gegenüber dem als Gehäuse dienenden zweiten Kupplungsteil 3 verdreht und gegenüber diesem drehfest arretiert werden.

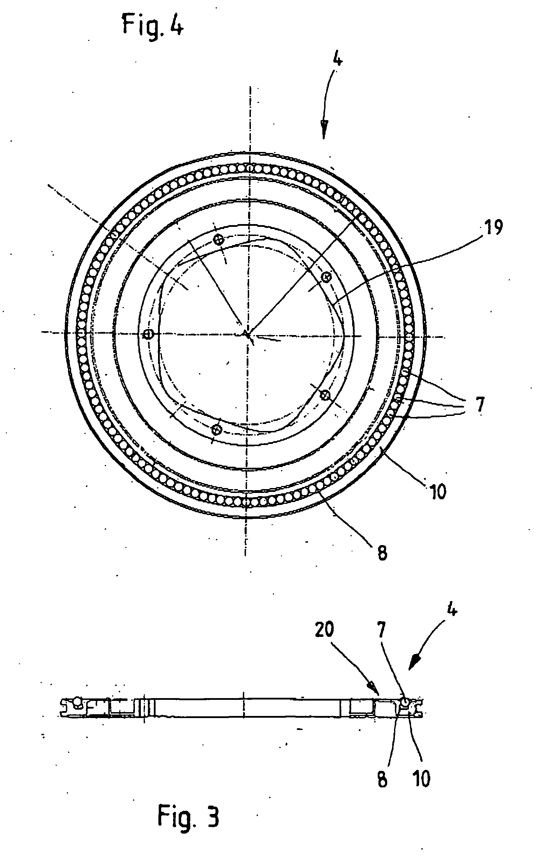

Die Fign. 3 und 4 zeigen das Kupplungselement 4 jeweils in einer Einzeldarstellung. Die zur Ausbildung der polygonalen Verbindung 5 zwischen dem Kupplungselement 4 und dem zweiten Kupplungsteil 3 dienende polygonale Kontur 19 des Kupplungselements 4 ist insbesondere Fig. 4 zu entnehmen.

Die federelastische Ausgestaltung des radialen Außenrandbereichs 10 des Kupplungselements 4 wird aufgrund der reduzierten Materialausgestaltung im Federbereich 20 des Kupplungselements 4 erreicht, wie dieser insbesondere Fig. 3 zu entnehmen ist.

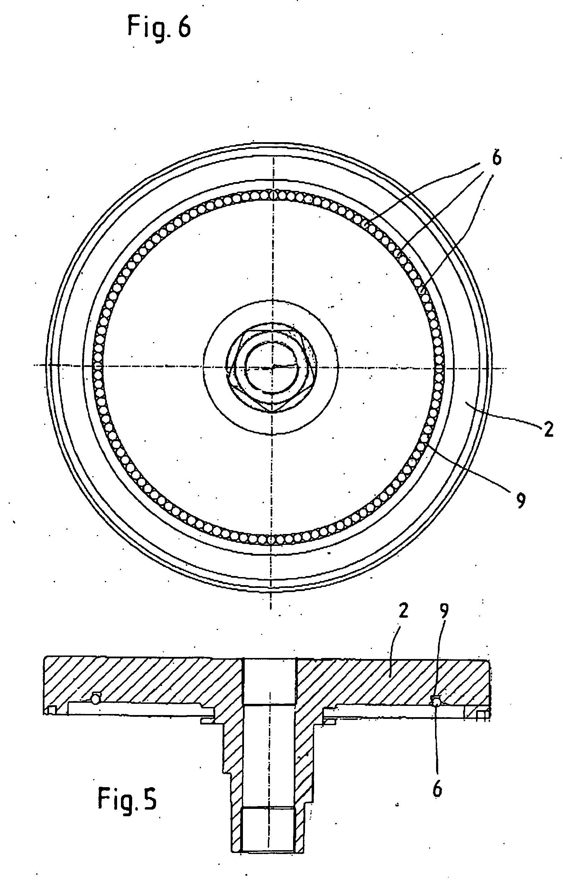

Die Fign. 5 und 6 zeigen das erste Kupplungsteil 2 nach Fig. 2 in zwei unterschiedlichen Ansichten, wobei eine Draufsicht von oben Fig. 6 zu entnehmen ist.

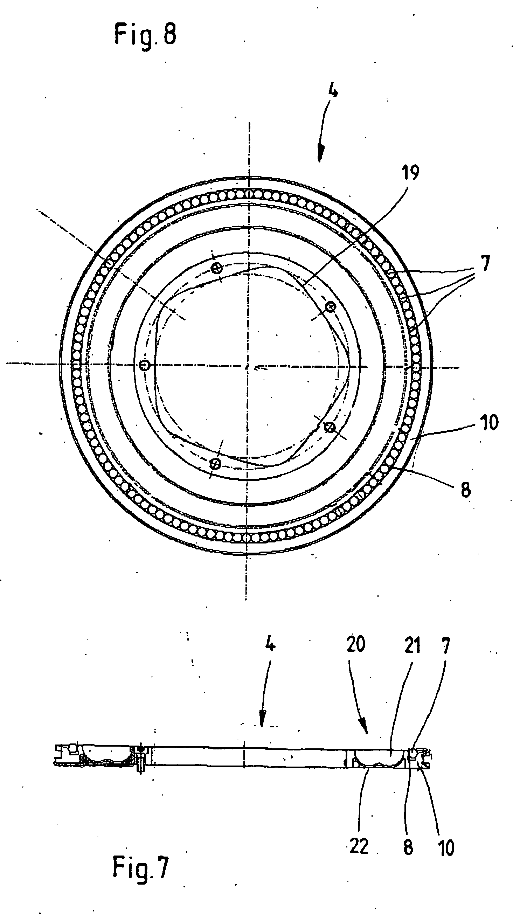

Ein Kupplungselement 4 gemäß einer alternativen Ausgestaltungsform zeigen die Fign. 7 und 8. Dabei unterscheidet sich das Kupplungselement 4 nach den Fign. 7 und 8 gegenüber dem Kupplungselement 4 nach den Fign. 3 und 4 durch die Ausgestaltung des Federbereichs 20. Dieser ist in der Ausgestaltungsform nach den Fign. 7 und 8 quasi als umlaufende Nut 21 ausgebildet, die einen mit Bezug auf die Zeichnungsebene nach Fig. 7 in der Mitte nach oben ausgewölbten Boden 22 aufweist.

### Bezugszeichenliste

- 1: Kupplung
- 2: erstes Kupplungsteil
- 3: zweites Kupplungsteil
- 4: Kupplungselement
- 5: Polygon-Verbindung
- 6: erstes Kupplungsglied
- 7: zweites Kupplungsglied
- 8: Nut
- 9: Ringnut
- 10: radialer Außenrandbereich
- 11: Druckkammer
- 12: Absatz
- 13: Absatz
- 14: Aufnahme
- 15: Achse
- 16: Schalttisch
- 17: Stimnut
- 18: Einlaß
- 19: Kontur
- 20: Federbereich
- 21: Nut
- 22: Boden

## Patentansprüche

1. Kupplung mit einem ersten Kupplungsteil (2) und einem zweiten Kupplungsteil (3), wobei die beiden Kupplungsteile (2, 3) um eine gemeinsame Achse relativ zueinander verdrehbar und in axialer Richtung in einem vorgegebenen, festen Abstand angeordnet sind, wobei ein Kupplungselement (4), das relativ zu einem der beiden Kupplungsteile (3) verdrehfest an diesem angeordnet ist, wobei für eine verdrehfeste Verbindung von Kupplungselement (4) und Kupplungsteil (3) eine Polygon-Verbindung vorgesehen ist und wobei das andere der beiden Kupplungsteile (2) ein Kupplungsglied (6) aufweist, das mit einem vom Kupplungselement (4) getragenen Kupplungsglied (7) zusammenwirkt, **dadurch gekennzeichnet, dass** das Kupplungselement (4) einen federelastischen Bereich (20) aufweist, welcher durch eine reduzierte Materialausgestaltung des Kupplungselementes (4) gebildet ist.

2. Kupplung nach Anspruch 1, **dadurch gekennzeichnet, dass** das Kupplungselement (4) ringförmig ausgebildet ist.

3. Kupplung nach einem der vorhergehenden Ansprüche, **dadurch gekennzeichnet, dass** das vom Kupplungselement (4) getragene Kupplungsglied (7) eine Kugel ist, die vorzugsweise in eine im radialen Außenrandbereich (10) des Kupplungselements (4) umlaufend ausgebildete Nut (8) eingesetzt ist.

4. Kupplung nach einem der vorhergehenden Ansprüche, **dadurch gekennzeichnet, dass** das Kupplungselement (4) in einer korrespondierend hierzu ausgebildeten Aufnahme (14) des einen Kupplungsteils (3) angeordnet ist.

5. Kupplung nach einem der vorhergehenden Ansprüche, **dadurch gekennzeichnet, dass** das das Kupplungselement (4) aufnehmende Kupplungsteil (3) eine Druckkammer (11) aufweist.

6. Kupplung nach einem der vorhergehenden Ansprüche, **dadurch gekennzeichnet, dass** das andere Kupplungsteil (2) eine umlaufende Ringnut (9) aufweist, in die das kupplungsteilige Kupplungsglied (2) eingesetzt ist, welches bevorzugterweise als Kugel ausgebildet ist.

## Claims

1. A coupling having a first coupling half (2) and a second coupling half (3), wherein the two coupling halfs (2, 3) are rotatable with respect to each other around a common axis and located with a pre-determined fixed distance in axial direction, wherein a coupling element (4) is provided which is arranged on one of the coupling halfs (3) in a non-rotatable way with respect to this one, wherein a polygonal connection is provided as torsion resistant connection of said coupling element (4) and said coupling half (3) and wherein the other one of the two coupling halfs (2) comprises a coupling member (6) which cooperates with a coupling member (7) carried by the coupling element (4), **characterized in that** the coupling element (4) comprises a resilient portion (20) which is formed by a reduced material configuration of said coupling element (4).

2. A coupling according to claim 1, **characterized in that** the coupling element (4) is ring-shaped.

3. A coupling according to one of the preceding claims, **characterized in that** the coupling member (7) carried by the coupling element (4) is a ball which is preferably placed in a groove (8) which extends around the radial marginal outer zone (10) of the coupling element (4).

4. A coupling according to one of the preceding claims, **characterized in that** the coupling element (4) is placed in a seat (14) corresponding to this one and arranged in the one coupling half (3).

5. A coupling according to one of the preceding claims, **characterized in that** the coupling half (3) receiving the coupling element (4) comprises a pressure chamber (11).

6. A coupling according to one of the preceding claims, **characterized in that** the other coupling half (2) comprises an annular groove (9) which extends around this one and into which the coupling member of the coupling half (2) is set, which coupling member is preferably a ball.

## Revendications

1. Dispositif d'accouplement comprenant un premier demi-accouplement (2) et un deuxième demi-accouplement (3), les deux demi-accouplements (2, 3) étant rotatifs l'un par rapport à l'autre autour d'un axe commun et étant disposés avec une distance fixe prédéterminée dans la direction axiale, à quoi un élément d'accouplement (4) est prévu qui est disposé sur l'un des deux demi-accouplements (3) de manière non-rotative par rapport à celui-ci, une liaison polygonale étant prévue en tant que liaison résistant à la torsion entre l'élément d'accouplement (4) et le demi-accouplement (3), et l'autre des deux demi-accouplements (2) comprenant un membre d'accouplement (6) qui coopère avec un membre d'accouplement (7) porté par l'élément d'accouplement (4), **caractérisé en ce que** l'élément d'accouplement (4) comprend une partie (20) élastique à ressorts laquelle est formée par une configuration de matière réduite de l'élément d'accouplement (4).

2. Dispositif d'accouplement selon la revendication 1, **caractérisé en ce que** l'élément d'accouplement (4) est annulaire.

3. Dispositif d'accouplement selon l'une des revendications précédentes, **caractérisé en ce que** le membre d'accouplement (7) porté par l'élément d'accouplement (4) est une boule qui est de préférence placée dans une rainure (8) qui s'étend autour de la zone marginale extérieure et radiale (10) de l'élément d'accouplement (4).

4. Dispositif d'accouplement selon l'une des revendications précédentes, **caractérisé en ce que** l'élément d'accouplement (4) est disposé dans un logement (14) correspondant à celui-ci et formé dans l'un demi-accouplement (3).

5. Dispositif d'accouplement selon l'une des revendications précédentes, **caractérisé en ce que** le demi-accouplement (3) recevant l'élément d'accouplement (4) comprend une chambre de compression (11).

6. Dispositif d'accouplement selon l'une des revendications précédentes, **caractérisé en ce que** l'autre demi-accouplement (2) comprend une rainure annulaire (9) qui s'étend autour de celui-ci et dans laquelle le membre d'accouplement du demi-accouplement (2) est placé, le membre d'accouplement étant de préférence une boule.
